# EUROPEAN PATENT APPLICATION

(11) **EP 1 655 962 A1**
(43) Date of publication of application: **10.05.2006**
(21) Application number: 04771093.4
(22) Date of filing: 30.07.2004
(51) Int. Cl.: H04N 7/18, H04N 7/173

(54) **REMOTE MONITORING SYSTEM**

(30) Priority: 01.08.2003 JP 2003285025
(71) Applicant: Cobalt Limited Partnership, Matsuyama-shi, Ehime 790-0922 (JP)
(72) Inventor: YASUNAGA, Fumika, 7900922 (JP); YASUNAGA, Hironori, 7900922 (JP)
(74) Representative: DTS Zürich
(86) International application number: PCT/JP2004/010933
(87) International publication number: WO 2005/013620

(57) **Abstract**

When a portable telephone (2) designates a camera number of a network camera (1), a center device (3) issues an imaging command, and the center device (3) receives first image data from the network camera (1). On the other hand, the center device (3) performs model discrimination based on the information transmitted from the portable telephone (2), converts the first image data to second image data based on the model information, transmits the second image data to the portable telephone (2), and the second image data is displayed on a display section of the portable telephone (2) having received the second image data. This enables, even if the portable telephone (2) is replaced with a new one, image data appropriate to a display size of the replaced portable telephone (2) to be easily displayed.

## Description

### Technical field

The present invention relates to a remote monitoring system, and more particularly, to a remote monitoring system capable of monitoring, through electronic communications circuits that supports two-way communications such as the Internet, whether or not there has been an invasion into a building such as a facility and/or a home by a suspicious individual, observing situations in schools and/or preschools, and the like from remote location, and enjoying scenery and various plants and animals such as pets from remote location.

### Background Art

With the prompt expansion of information networks that use electronic communication circuits that support two-way communications such as the Internet, various types of monitoring systems have been developed wherein network cameras and terminal devices, such as portable telephones are connected to the Internet through center device for remote monitoring of a subject of interest.

For example, the document 1 discloses a security service system that receives, through a bulletin terminal interface, bulletin information that is generated by the detection of an aberrant status or by a call from a visitor, processes the bulletin information into security information that is in a form that is compatible with a subscriber terminal based on the subscription information that is stored in a database by a control means, and uses a subscriber terminal interface to transmit the security information to a subscriber terminal.

In the document 1, the subscription information regarding the security service for each subscriber (for example, the location of the bulletin origin, the e-mail address of the transmission destination, the type of subscriber terminal) is stored in a database in advance, and the bulletin information is processed, based on this subscriber information, into security information in a format that is compatible with the subscriber terminal, so that even if the subscriber terminal has been replaced with a portable telephone of a different type, the bulletin information can be outputted to the portable telephone of the subscriber from the bulletin terminal without modification in the bulletin terminal.

Furthermore, in the document 1, the conversion is to image data in a format that is compatible with the subscriber terminal, based on the subscriber information, and the bulletin information is transmitted to the subscriber terminal in a state wherein image data is added to the security information, thus enabling the output of image data that is compatible with the display screen of a portable telephone.

The document 2 discloses a monitoring system center device that stores, in an image database, images captured by a monitoring camera and then, transmits the entire image to a portable telephone, and when the user wishes an enlarge display of the image data, a web page that is provided by the center device is accessed, and after an Enlarge Display menu is displayed, a partial image that contains the subject to be enlarged and displayed is extracted and transmitted to the portable telephone.

In the document 2, a detailed image of the desired subject can be displayed, through an enlarged display of a partial image, even on a display screen of small portable telephone.

The document 3 discloses an image conversion system wherein display device model information is obtained over a network, and variable parameters such as brightness, contrast, gamma correction, tone reduction method, etc., which are prepared depending on the model information, are used to perform a process for converting the requested image into an image that is compatible with the display device, where the image that is obtained through this conversion process is transmitted to the display device via a network.

The document 1: JP2002-279558A (Fig. 3)

The document 2: JP2003-199097A (Fig. 1)

The document 3: JP2003-228540A (Fig. 1)

### Disclosure of the invention

Problems to be solved by the invention

In this type of remote monitoring system, when a portable terminal, such as a portable telephone, is used as the terminal device, the display size of the display screen in the terminal device is small, and the display size will vary depending on the model (the kind of the type), and thus it is desirable to process the image data that is captured by a network camera into image data of the appropriate display size depending on the model before transmission to the terminal device.

However, in the document 1, even though image data is outputted depending of the display screen of the portable telephone, because the bulletin data is transmitted to the subscriber terminal in a state wherein image data is added to security data, when there is a change in model specifications, such as when a model is replaced, the subscriber information must be updated in the database, requiring rather burdensome updating procedures of the user, and thus there is a problem in terms of poor ease of use.

Moreover, the document 2 provides an enlarged display by extracting partial images, and has a problem in that it is not possible to display the image data in the optimal display size because it is not possible to change the display size automatically depending on the model of the terminal device.

The document 3 improves the quality of the image using brightness, contrast, gamma correction, and the like, as variable parameters, but does not convert the image data so as to match the display size of a portable telephone.

Therefore, it is the object of the invention to provide a remote monitoring system capable of displaying, with ease, image data that matches the display size of the new terminal device even when a terminal device has been replaced with a new terminal device.

### Means for solving the problem

To attain the above-object, according to the invention, there is provided a remote monitoring system which a plurality of imaging devices for imaging objects, a plurality of terminal devices provided with display parts for displaying as image data that the objects imaged by the imaging devices, and center device for controlling the imaging devices are connected through electronic communications circuits that support two-way communications;
the improvement comprising:
the imaging device having first image data outputting means for outputting first image data obtained by imaging the object to the center device; and
the center device having first registration means for registering user identification information, storage means for storing the display size of the display part for each model of the terminal device, discriminating means for discriminating the model based on information transmitted from the terminal device, image data converting means for reading out through the storage means the display size compatible with the model information obtained through the model discrimination, and for converting the data size of the first image data into second image data compatible with the display size, and second image data output means for outputting the second image data to a specific terminal device associated with the identification information.

More, a remote monitoring system according to the present invention, at least one sensor for sensing a specific object is provided corresponding to each of the imaging devices; and the imaging device having first imaging means for performing an imaging process based on an directive from the sensor, and identification information transmission means for transmitting, to the center device, identification information for a user associated with the imaging device that has performed the imaging process; and the center device having second registration means for registering an e-mail address for the terminal device, associated with the identification information, and first transmission means for transmitting e-mail to an associated specific terminal device depending on the e-mail address.

More, a remote monitoring system according to the present invention, at least one sensor for sensing a specific object is provided corresponding to each of the imaging devices; and the first registration means registers active members who can issue imaging commands from the terminal device and passive members who can receive image data obtained through imaging commands from the sensor separately.

Further, a remote monitoring system according to the present invention, the imaging device comprises second imaging means for imaging the object pseudo-continuously at a predetermined interval, and second transmission means for transmitting continually the first image data that imaged by the second imaging means to the center device; and the center device comprises receiving means for receiving first image data that is transmitted by the second transmission means, and third transmission means for transmitting the second image data to the concerned terminal device when an image transmit command has been received from a specific terminal device.

Further, a remote monitoring system according to the present invention, first image data from before and after detection thereof is converted into the second image data and transmitted to the specific terminal device by the third transmission means when a sensor connected to the imaging device has sensed the object.

More, a remote monitoring system according to the present invention, the center device comprises enlarged display means for selecting a part of the second image data, and for enlarging and displaying on the display part.

More, a remote monitoring system according to the present invention, the terminal device comprises identification information input means for inputting user identification information, and designation means for designating a specific imaging device from at least one imaging device possessed by the user on a display screen; and the center device comprises provision means for providing the display screen to the terminal device based on the identification information.

More, a remote monitoring system according to the present invention, the terminal device is a mobile communications device.

More a remote monitoring system according to the present invention, objects to be imaged by the imaging device include animals and plants for enjoyment.

Further, a remote monitoring system according to the present invention, the imaging device is installed in a predetermined location inside or outside of a building.

### Advantageous effects of the invention

According to the remote monitoring system of the present invention, the imaging device having first image data outputting means for outputting first image data obtained by imaging the object to the center device; and the center device having first registration means for registering user identification information, storage means for storing the display size of the display part for each model of the terminal device, discriminating means for discriminating the model based on information transmitted from the terminal device, image data converting means for reading out through the storage means the display size compatible with the model information obtained through the model discrimination, and for converting the data size of the first image data into second image data compatible with the display size, and second image data output means for outputting the second image data to a specific terminal device associated with the identification information, and thus enabling to obtain the second image data which has been converted into the desired display size easily, therefore saving the works to update the registration of detail specification of terminal device if the terminal device has been replaced with new one, thereby providing a remote monitoring system with the convenience enhancement.

Moreover, according to the remote monitoring system of the present invention, at least one sensor for sensing a specific object is provided corresponding to each of the imaging devices; and the imaging device having first imaging means for performing an imaging process based on an directive from the sensor, and identification information transmission means for transmitting, to the center device, identification information for a user associated with the imaging device that has performed the imaging process; and the center device having second registration means for registering an e-mail address for the terminal device, associated with the identification information, and first transmission means for transmitting e-mail to an associated specific terminal device depending on the e-mail address, and thus when the imaging process has been performed based on the directive from a sensor, user identification information is transmitted to the center device, and the e-mail is transmitted from the center device to a terminal device that is compatible with the user identification information. The user that receives the e-mail can access the center device to check easily, on the display part, the second image data to which the image has been converted. That is, in this case, second image data which has been converted to have a desired display size, as described above, can be obtained easily, therefore saving the works to update the registration of detail specification of terminal device if the terminal device has been replaced with new one, thereby providing a remote monitoring system with the convenience enhancement.

Moreover, according to the remote monitoring system of the present invention, at least one sensor for sensing a specific object is provided corresponding to each of the imaging devices; and the first registration means registers active members who can issue imaging commands from the terminal device and passive members who can receive image data obtained through imaging commands from the sensor separately, and thus enabling easy provision of services according to the desires of the users of the terminal device.

Furthermore, the imaging device comprises second imaging means for imaging the object pseudo-continuously at a predetermined interval, and second transmission means for transmitting continually the first image data that imaged by the second imaging means to the center device; and the center device comprises receiving means for receiving first image data that is transmitted by the second transmission means, and third transmission means for transmitting the second image data to the concerned terminal device when an image transmit command has been received from a specific terminal device, and thus enabling display, in real time, second image data which has been converted into a desired size on the display part of the terminal device, even without an imaging command being issued from the terminal device or a sensor.

Moreover, first image data from before and after detection thereof is converted into the second image data and transmitted to the specific terminal device by the third transmission means when a sensor connected to the imaging device has sensed the object, and thus doing so enables the display, in real time, of image data on the display part from before a sensor reaction until after the sensor reaction, when a sensor has a reaction.

Furthermore, the remote monitoring system according to the present invention is able to enlarge and display a desired part of the image data, without the risk of a degradation in the image quality, or the like, because the center device has enlarged display means for selecting, and enlarging and displaying on the aforementioned display part, a portion of the second image data.

Moreover, in the image monitoring system according to the present invention, because the terminal device comprises identification information inputting means for inputting user identification information and specification means for specifying a specific imaging device from among the one or more imaging devices possessed by the aforementioned user, and because the center device comprises provision means for providing, to the terminal device, the display screen based on the aforementioned identification information, the user, by merely inputting identification information, on the display part of the terminal device, can select and specify a specific imaging device from more than one imaging devices possessed by the user, thereby enabling the user to check the images captured by any given imaging device at any given time with ease.

Moreover, in the remote monitoring system according to the present invention, the terminal device being a portable communications device enables display the second image data in the desired display size on portable terminals with small display sizes, such as portable telephones, PDA (personal digital assistants), and PHSs (personal handy-phone systems) and enables quick responses to changes in models.

Moreover, the remote monitoring system according to the present invention including animals and plants to be enjoyed as objects for imaging by the aforementioned imaging device is useful for observing, from remote locations, pets or gardens maintained by households.

Moreover, in the remote monitoring system according to the present invention, having the imaging device installed in a specific location indoors or outdoors enables the observation of the state of a school, and a nursery school and the like, and enables easy checking, from a remote location, of whether or not there has been an intrusion by a suspicious individual.

### Brief description of the drawings

Fig. 1 is a system block diagram showing one embodiment (a first embodiment) of a remote monitoring system according to the present invention.
Fig. 2 is a table showing one example of an image conversion data storage section.
Fig. 3 is a flowchart showing one embodiment of an active mode procedure.
Fig. 4 is a figure showing one example of an authentication site on a portable telephone.
Fig. 5 is a figure showing one example of a camera input screen on a portable telephone.
Fig. 6 is a figure showing image data that has undergone a conversion process along with image data that has not undergone the conversion process.
Fig. 7 is a flowchart showing one embodiment of a passive mode procedure.
Fig. 8 is a flowchart showing an active mode procedure as a second embodiment according to the present invention.
Fig. 9 is a figure showing one example of image data on the display part illustrating a third embodiment according to the present invention.
Fig. 10 is a figure showing an example of a divided image command screen.
Fig. 11 is a figure showing another example of image data on a display part in the third example of embodiment according to the present invention.
Fig. 12 is a system structural diagram showing a fourth embodiment of a remote monitoring system according to the present invention.
Fig. 13 is a table showing one example of the registration section in Fig. 12.

### Description of the reference numerals

- 1: Network camera (imaging device, first image data outputting means, First and second imaging means, identification information transmission means, second transmission means)
- 2: Potable telephone (terminal device, mobile communication device, identification information input means, designation means)
- 2a: Display part
- 3: Center device
- 4: Internet (electric communication circuits)
- 7: Sensor
- 9: Web server (first image data outputting means, imaging command means, receiving means, second transmission means, provision means)
- 9a: User ID registration section (first registration means)
- 10: Mail server (first transmission means)
- 10a: Mail address registration section (second registration means)
- 11a: Image conversion/data storage section (image data converting means, discriminating means, enlarged display means)
- 11b: image conversion-processing section (storage means)
- 15: Web/mail server (second image data output means, imaging command means, receiving means, first and third transmission means, Provision means)
- 15a: Registration section (first registration means)

### Best mode for carrying out the invention

The best mode for carrying out the invention will now be described in detail with reference to the drawings.

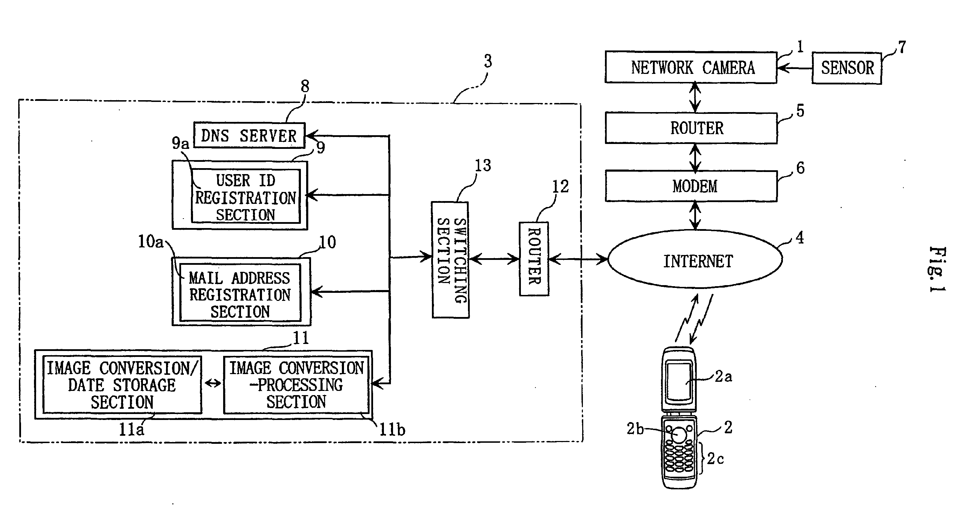

Fig. 1 is a system block diagram illustrating one embodiment (the first embodiment) of a remote monitoring system according to the present invention. In the remote monitoring system, a network camera 1 (an imaging device) for imaging an object to be photographed, a portable telephone 2 (a mobile communications device) equipped with a display part 2a, operating buttons 2b, dial keys 2c, etc., and center device 3 which controls the network camera 1 and the portable telephone 2 are connected through the Internet 4 (electronic communications circuits).

Moreover, a DDNS (dynamic domain name system)-compatible router 5 and a modem 6 which converts between digital signals and analog signals are interposed between the network camera 1 and the Internet 4. Furthermore, a sensor 7, such as a magnetic sensor or an infrared sensor, is connected to the network camera 1, whereby the sensor information from the sensor 7 is transmitted sequentially to the network camera 1.

While in Fig. 1 there is a single network camera 1, a single user may install network cameras 1 in a plurality of locations to structure a network, and a single network camera 1 may be connected to a plurality of sensors 7.

The center device 3 comprises a DNS server 8, a web server 9, a mail server 10, an image conversion server 11, a router 12 that is connected to the Internet 4, and a switching section 13 interposed between the router 12 and each of the above-servers 8, 9, 10, and 11.

The DNS server 8 performs management in association with the IP (Internet Protocol) address and the domain name, and controls the router 5 so as to issue commands for rotating the network camera 1 up, down, to the left, or to the right, as needed, based on commands from the portable telephone.

The web server 9 has a user ID registration section 9a wherein user identification information (hereinafter referred to as "user ID") is registered together with a password, and then, the web server 9 manages the user ID registration section 9a, and controls the portable telephone 2 and the behavior of the network camera 1.

The mail server 10 has a mail address registration section 10a wherein the e-mail address of each portable telephone 2 is registered in association with a user ID, and then, the mail server 10 manages the mail address registration section 10a, and controls the transmission and receiving of e-mail between the network camera 1 and the portable telephone 2.

The image conversion server 11 has an image conversion data storage section 11a that stores image conversion data in proportion to the display size of the display part 2a, and an image conversion processor section 11b that performs the conversion-process for the image data by referencing the contents of the memory of the image conversion data storage section 11a.

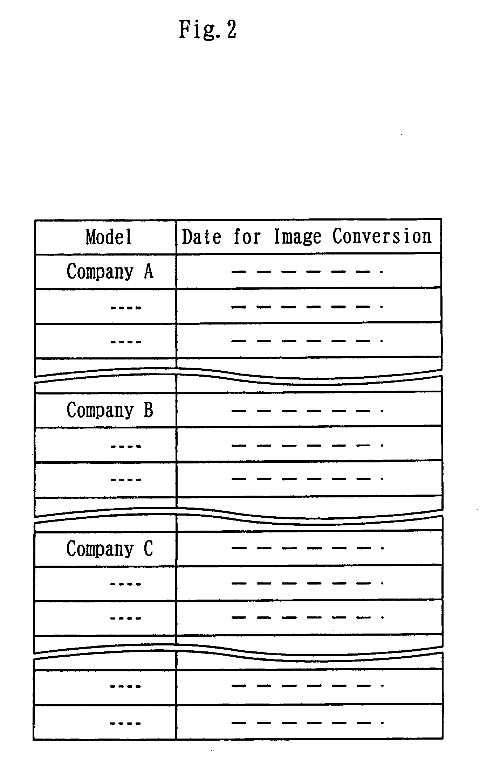

The image conversion data storage section 11a, as shown in Fig. 2, stores data for image conversion for all models that are sold by various portable telephone companies (Company A, Company B, Company C, ...), and the data for image conversion is immediately written in and stored by the administrator of the center device 3 each time a new model goes on the market. The data columns for image conversion in Fig. 2 are, specifically, filled in with the number of dots of the display size of the display part 2a.

Moreover, the present remote monitoring system has an active mode whereby the user can check image data from a network camera 1 based on commands from the portable telephone 2, and a passive mode whereby the user can check image data imaged by the network camera 1 in response to the operation of the sensor 7, and is constituted so as to display the image data imaged by the network camera 1 onto the display part of the portable telephone, doing so with a display size that is dependent on the model of the portable telephone.

Next, the control procedure according to the present remote monitoring system will be described in detail.

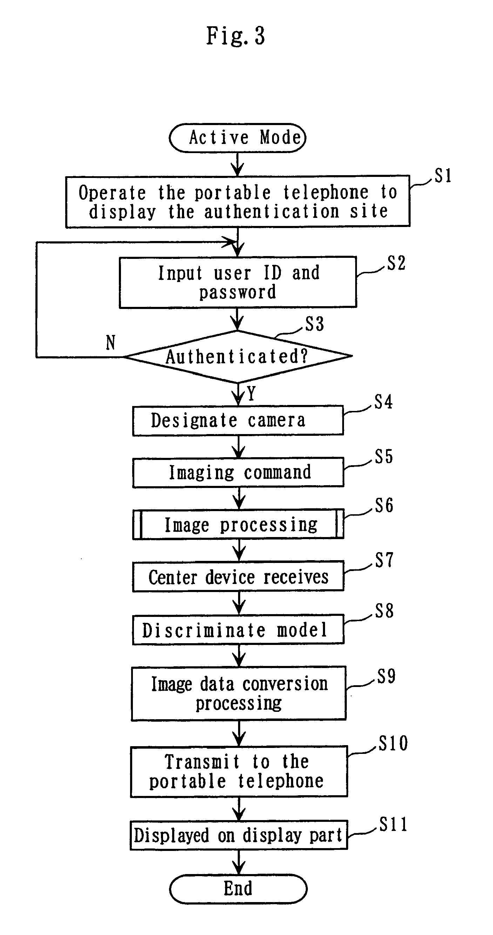

Fig. 3 is a flowchart showing one embodiment of the active mode procedure.

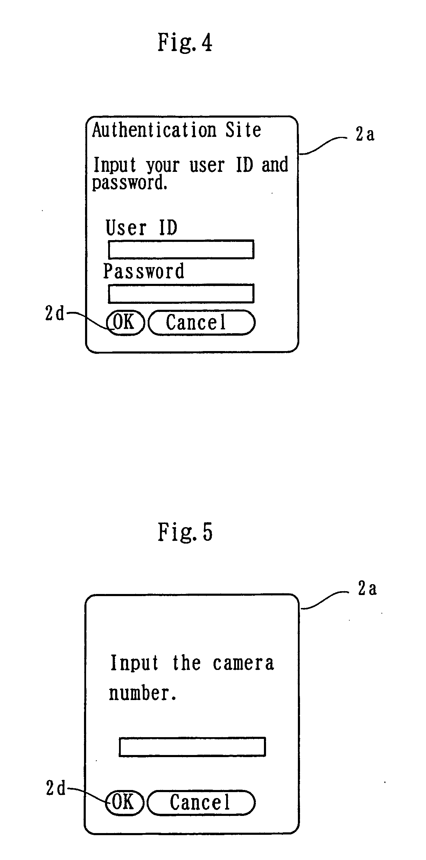

First, in Step S1, the portable telephone 2 is operated to display the authentication site. That is, the operating buttons 2b of the portable telephone 2 are operated to call the URL of the center device 3, stored in advance in the portable telephone 2, to access the center device 3, at which time an authentication site will be displayed on the display part 2a, as shown in Fig. 4.

Next, in Step S2, the user ID and password are inputted, and the OK button 2d is clicked. And then, in Step S3 the web server 9 searches the user ID registration section 9a and discriminates whether or not the user ID and password are authenticated. When the response is No, processing returns to Step S3, where the user is prompted to input the user ID and password again, after which the process of Step S3 is performed. On the other hand, when the response in Step S3 is Yes, processing advances to Step S4, and the screen for inputting the camera number is displayed, as shown in Fig. 5. That is, when the user ID and password are authenticated, a web site having the user is displayed on the display part 2a, and the user is prompted to input the camera number. The above-web site is provided from the web server 9 after the user ID is authenticated, so only the camera numbers of the network cameras 1 owned by the user that has received the authentication can be inputted.

When the user has designated the desired camera number and clicked the OK button 2d, the camera number information is transmitted to the web server 9.

Subsequently, the web server 9 which has received the camera number information, in Step S5, issues an imaging command to the network camera 1 corresponding to the above-camera number, and in Step S6 the network camera 1 performs the imaging. At this time, the DDNS function of the router 5 may be driven by the DNS server 8 to issue up, down, left, or right rotation commands to the network camera 1.

Next, the processing advances to Step S7, and the first image data imaged by the network camera 1 is received by the image conversion server 11, and then, in Step S8, the model is discriminated by the image conversion processor section 11b based on the information transmitted from the portable telephone 2. That is, the model information is included in the access signal that is transmitted from the portable telephone 2, and the image conversion processor section 11b discriminates the model of the portable telephone 2 based on this model information.

Subsequently, the image data conversion process is performed in Step S9. That is, the image conversion data is read out by searching the image conversion data storage section 11a based on the model information discriminated in Step S8, and the first image data is converted the second image data in the image conversion processor section 11b.

Next, in Step S10, the second image data, for which image conversion processing has been performed, is transmitted from the image conversion server 11 to the portable telephone 2, and, in Step S11, the second image data is displayed on the display part 2a of the portable telephone 2, thus completing the process.

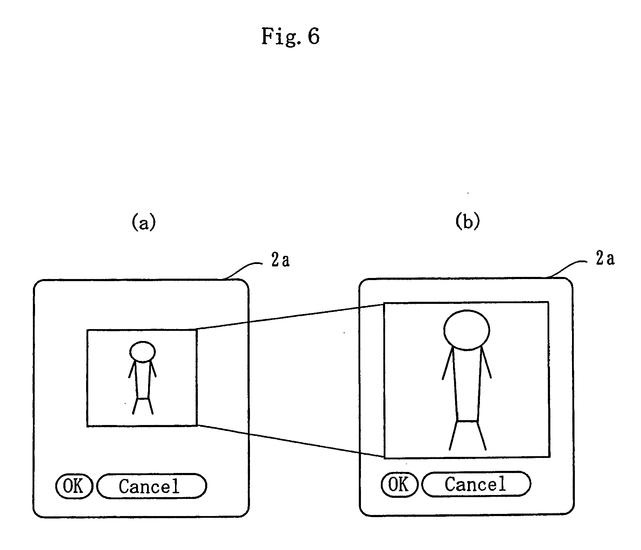

Fig. 6 is a figure illustrating schematically the state of the display of the image data in the display part 2a. When the terminal device has been changed from a portable telephone with a small display size to a portable telephone with a large display size, in the present first embodiment, as shown in Fig. 6 (b), the image data is converted based on the model data that is included in the information transmitted from the portable telephone 2 to the image conversion server 11, and thus the first image data is converted into the second image data, thereby enabling the display of image data that fits the display size of the display part 2a, whereas, conventionally, as shown in Fig. 6 (a), only image data corresponding to the previous small display size could be displayed on the display part 2a, unless the subscriber information has been updated on the user side.

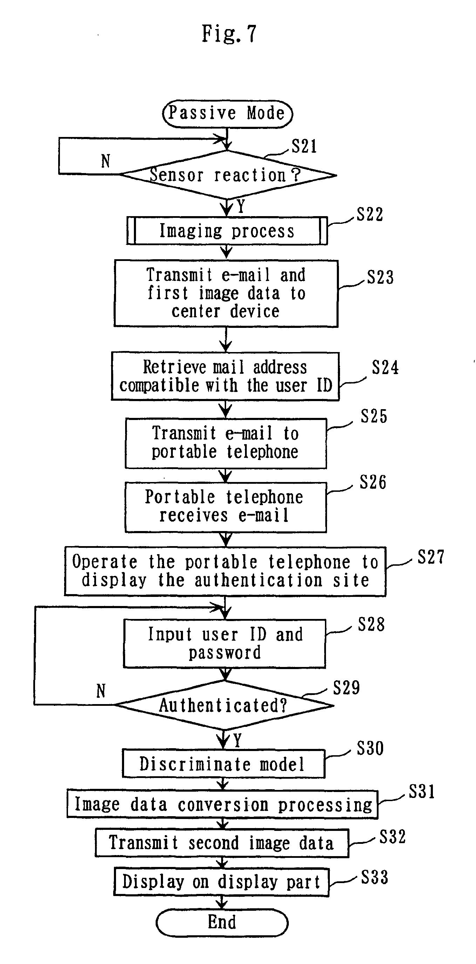

Fig. 7 is a flowchart illustrating one embodiment of a passive mode procedure.

First, in Step S21, the sensor 7 discriminates whether or not the specific object to be photographed, for example, the intrusion of a suspicious individual, has been detected. When the sensor 7 has detected this specific object to be photographed, the processing advances to Step S22, in which the network camera 1 performs the imaging process. Subsequently, in Step S23, the first image data that has been imaged is transmitted to the web server 9 of the center device 3, and an e-mail that includes the user ID is transmitted to the mail server 10.

In following Step S24, the e-mail address compatible with the user ID is read out by a search of the mail address registration section 10a, and then, in Step S35, an e-mail is transmitted to the portable telephone 2 indicating that there is image data to be provided.

Next, in Step S26, the e-mail from the mail server 10 is received by the portable telephone 2, in following Step S27, the portable telephone 2 is operated to display the authentication site. That is, when the operating buttons 2b of the portable telephone 2 are operated to call the URL of the center device 3 which is stored in advance in the portable telephone 2, thereby the center device 3 is accessed, the authentication site is displayed on the display part 2a, as well as in case of the active mode (see Fig. 4).

Subsequently, in Step S28, the OK button 2d is clicked after the user ID and password have been inputted, and in Step S29 a discrimination is made as to whether or not the user ID and password have been authenticated. When the response is No, the processing returns to Step S28, in which the user is prompted to input the user ID and password again, and then Step S29 is performed.

On the other hand, when the response in Step S29 is Yes, the processing advances to Step S30, in which, in the image conversion processor section 11a, the model is determined based on the model information that is included in the transmission information that is transmitted from the portable telephone 2, and in following Step S31, the first image data is converted into second image data based on the model information, as well as in case of the active mode.

Next, in Step S32, the image conversion server 11 transmits the second image data, for which the image has been converted, to the portable telephone 2, and in Step S33 the second image data is displayed on the display part 2a of the portable telephone 2, thus completing the process.

In the first embodiment, as described above, the center device 3 can obtain the model information merely through the portable telephone 2 calling the URL of the center device 3 to access the center device 3 each time an image data display request is performed, and thus there is no need to update the registration of the model information of the new terminal device on the user side when the terminal device, such as a portable telephone, has been replaced, thus enabling image data to always be provided to the terminal device in conformity with the display size of the display part of the terminal device, thus saving the work required in the updating procedures when the terminal device has been replaced.

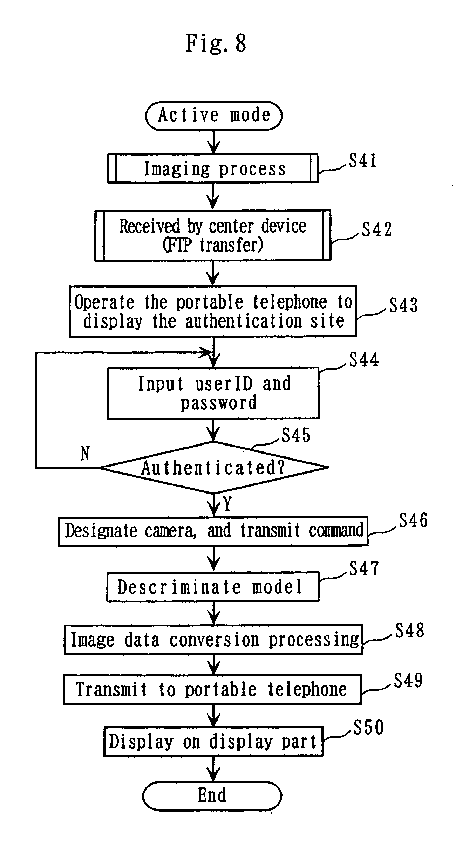

Fig. 8 is a flowchart for the active mode showing a second embodiment according to the present invention, in which, in the second embodiment, the network camera 2 performs the imaging process pseudo-continuously each time a predetermined interval (for example, 5 seconds) elapses, and the image data is transmitted sequentially to the center device 3 by an FTP (File Transfer Protocol), so that when the user designates a camera number, the image data will be transferred to the portable telephone 2 immediately and in real time to display the image data of the desired size on the display part 2a without waiting for the imaging process.

That is, first, in Step S41, the network camera 1 performs the imaging process pseudo-continuously at the predetermined interval, and in following Step S42, the first image data which imaged by the network camera 1 is continually transmitted to the center device 3 by the FTP.

And then, in Step S43, the user operates the portable telephone 2 to display the authentication site. That is, the user operates the operating buttons 2b of the portable telephone 2 to call the URL of the center device 3, stored in advance in the portable telephone 2, to access the center device 3, to thereby display the authentication site on the display part 2a.

Subsequently, in Step S44, the user ID and password are inputted and the OK button 2d is clicked, and in following Step S45, a discrimination is made as to whether or not the user ID and password are authenticated. When the response is No, the processing returns to Step S44, in which the user is prompted to input the user ID and password again, and then, Step S45 is performed.

On the other hand, when the response in Step S45 is Yes, the processing advances to Step S46, in which the camera number is designated, and an image data transmit command is issued to the center device 3.

Next, in Step S47, the model is discriminated based on the information transmitted from the portable telephone 2 in the image conversion processor section 11b, and then, in Step S48, the image data conversion is performed.

Subsequently, in Step S49, the second image data, for which the image conversion process has been performed, is transmitted from the image conversion server 11 to the portable telephone 2, and, in Step S50, the second image data is displayed on the display part 2a of the portable telephone 2, thus completing the procedure.

In the second embodiment, as described above, the second image data, for which the image has been converted into the desired size, can be displayed on the display part 2a of the portable telephone 2 without the user performing the bothersome registration update procedures accompanying the model change when the terminal device, such a portable telephone 2, has been replaced, as well as the first embodiment.

Furthermore, the first image data which imaged pseudo-continuously by the network camera 1 is transmitted to the center device 3 by FTP, and thus the convenience can be enhanced through the user being able to confirm the second image data, for which the image conversion has been performed, in real time, without issuing an imaging request to the network camera 1.

More, although not shown in a figure, also in the passive mode, the image data can be displayed on the display part in real time, from before the reaction of the sensor 7 after until the reaction of the sensor 7, by the network camera 1 performing the imaging process at the predetermined interval and transmitting the image data to the center device 3 by the FTP, when the sensor 7 has reacted.

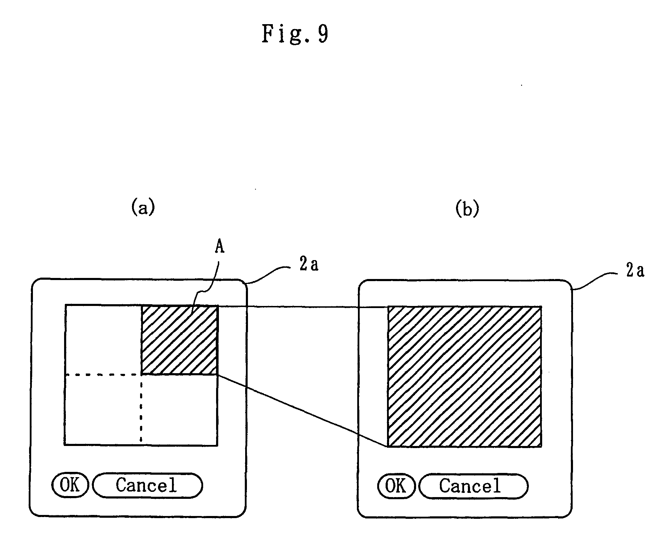

Fig. 9 is a display screen illustrating a third embodiment according to the present invention, in which, in the third embodiment, one portion of the second image data, for which image conversion has been performed, is selected and is enlarged and displayed.

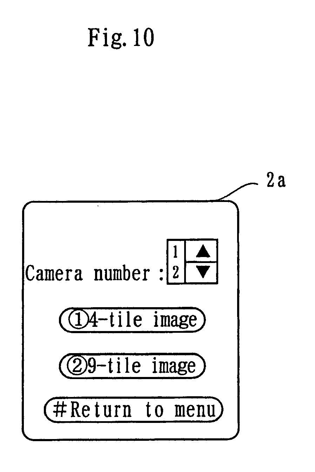

That is, the predetermined operations have been performed beforehand, to thereby a split selection screen is displayed in the web site, as shown in Fig. 10, and after the operating screen has been clicked to select the camera number, for example, a four-tile image is selected. After this, the second image data, for which image conversion has been performed, is displayed on the display part 2a of the portable telephone 2 through performing the operations, such as described above, in Step S11 in Fig. 3, Step S33 in Fig. 7, Step S50 in Fig. 8, etc., and the upper right image (indicated by the cross-hatched part A) in Fig. 9 is selected. Then, the second image data is converted into third image data by the image conversion server 11d, and, as shown in Fig. 9, the upper right image is displayed with an image data size that is appropriate to the display size.

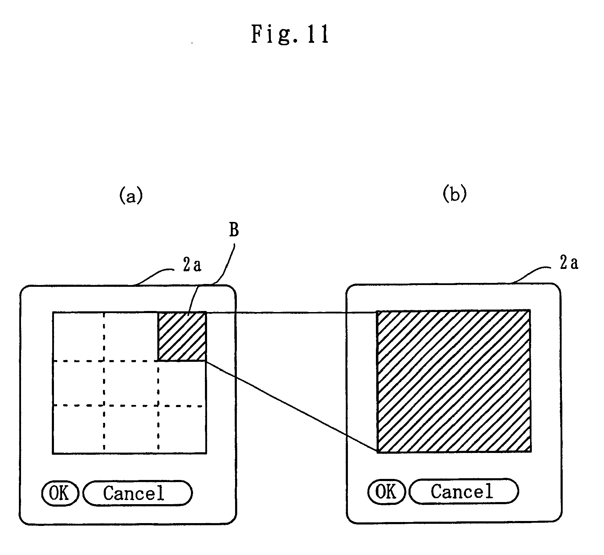

Similarly, when the nine-tile image display is selected in the split selection screen of Fig. 10, the upper right image (indicated by the cross-hatched part B) in Fig. 11 is enlarged and displayed.

As described above, in the third embodiment, a portion of the display size that is displayed on the display part 2a is enlarged and displayed using the image conversion server 11 of the center device 3, thereby the image data of the desired size is able to display on the display part 2a without causing image degradation.

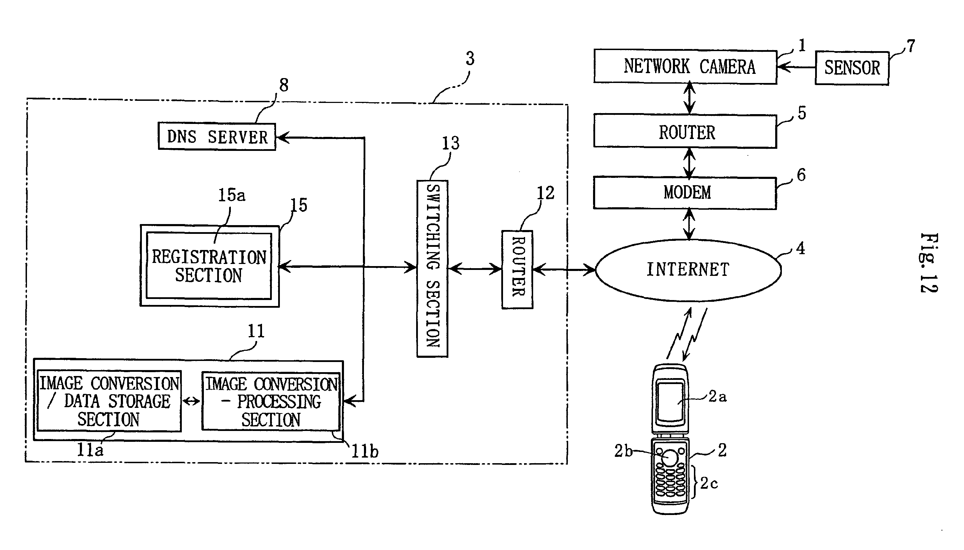

Fig. 12 is a system block diagram illustrating a fourth embodiment of a remote monitoring system according to the present invention, in which, in the fourth embodiment, both the active mode and the passive mode are controlled by the web mail server 15.

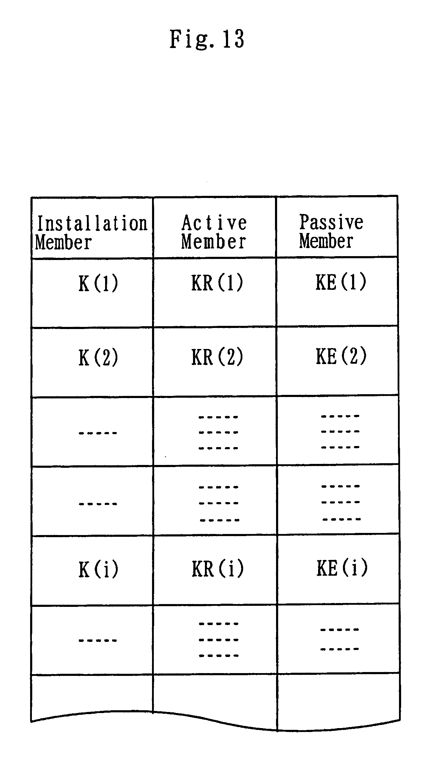

That is, in the fourth embodiment, identification information (user IDs) is registered in the registration section 15a for each of the installation members who have installed each of the network cameras 1, the active members, and the passive members, as shown in Fig. 13. Here the active members are those members who are able to observe and enjoy the object (the image data) in active mode, and the passive members are those members who are able to check, etc., the object (the image data) in passive mode.

A variety of different examples can be considered for the installation locations and membership setups for the network cameras 1. For example, when monitoring by installing sensors 7 and network cameras 1 at predetermined locations of inside and outside of a house for the purposes of preventing the intrusion of suspicious individuals into the house, all of the members of the family may be active and passive members, and, relatives, etc., may be active members. When a pet is to be observed through the installation of a network camera near the pet's bed, everybody who desires to, including the family, would probably be active members. Moreover, when a network camera is installed in an orchard, then all of the installation members would probably be active members and passive members for mutual cooperative monitoring. Moreover, when network cameras 1 are installed facing animals in zoos or fishes in aquariums, the breeders may be passive members and persons who are not the breeders may be active members.
Furthermore, when the sensor 7 is a water temperature sensor that detects aberrant water temperatures in an aquarium, the system may be structured so that the sensor 7 will work together with a network camera 1 to operate the network camera 1, and in this case the breeders would be set up to be passive members to receive the transmissions of the image data. Moreover, when one wished to know the state of children within a preschool or a nursery school, or when one wished to observe the state of students, etc. within an elementary school or a middle school, all of the parents would probably be active members in the system. When the network cameras 1 are installed in the vicinity of the entrances of buildings such as preschools or schools to watch for the intrusion of suspicious people, the parents, teachers, etc., would probably be passive members.

By installing network cameras 1 in various airports, or the like, and recruiting active members, the registered active members will be able to find out the weather conditions at the destination prior to departure. In such a case, having a thermometer, a specific flag wherein the vertical position is fixed by the wind speed, or the like, so as to also be photographed by the network camera 1, the active members will be able to find out the weather conditions, the temperature, and the wind speed from the image data from a single network camera 1.

By installing these network cameras 1 at predetermined locations of inside and outside of buildings, and setting up and registering active members and/or passive members depending on the locations wherein the network cameras 1 are installed, it is possible to construct the remote monitoring system in conformity with the user's usefulness and desires with ease.

The present invention is not limited to the above-embodiments. While, in the above-embodiments, the network camera 1 is operated in conformity with the detecting of the sensor 7 in passive mode, both a sensor 7 and a motion detection function may be used to control the operation of the network camera 1 in passive mode by using a network camera 1 with a built-in motion detector function that detects differential motion of the object to be photographed.

Furthermore, while, in the above-embodiments, a network camera 1 is used to perform the imaging process, a well-known CCD camera (for example, an infrared night-vision camera) may be combined with an IP conversion server that converts the signal from the CCD camera into an IP signal.

Moreover, while, in the above-embodiments, a portable telephone is used as the terminal device, the present invention can be applied in the same way to other mobile communications devices such as PDAs and PHSs, and may be applied similarly also to stationary terminal devices such as personal computers.

Furthermore, while broadband transmission is preferred as the transmission method, the transmission method is not specifically limited thereto, but may be a dial-up method analog transmission, ISDN, Bluetooth, etc. When it comes to the electronic communications circuits, while the Internet is a typical example, the present invention may, of course, be applied to various types of LANs as well.

Furthermore, while, in the above-embodiments, still images are displayed on the portable telephone 2, pseudo-moving images or video images may also be enlarged and displayed. For example, the network camera may perform imaging of the object continually at predetermined intervals and transfer the images to the center device 3 by FTP, in the same manner as was described in the second embodiment, to display still images on the display screen of the portable telephone pseudo-continuously. Moreover, video playback application software, such as the AVI (Audio Visual Interleaving) by Microsoft Corporation (USA) may be used to convert static images transmitted by FTP into video images to playback video on the terminal device, such as the portable telephone 2.

In the present invention, while the focus is on converting the image data depending on the display size of the terminal device, at the same time various file formats such as the JPEG format, the GIF format, and/or the PNG format may be converted mutually, as needed, a compression/decompression process of the image data may performed on the image data as well.

### Industrial applicability

The present invention may be used in various types of remote monitoring systems used in information networks.

## Claims

1. In a remote monitoring system which a plurality of imaging devices for imaging objects, a plurality of terminal devices provided with display parts for displaying as image data that the objects imaged by said imaging devices, and center device for controlling said imaging devices are connected through electronic communications circuits that support two-way communications;
the improvement comprising:
said imaging device having first image data outputting means for outputting first image data obtained by imaging said object to said center device; and
said center device having first registration means for registering user identification information, storage means for storing the display size of said display part for each model of said terminal device, discriminating means for discriminating the model based on information transmitted from said terminal device, image data converting means for reading out through said storage means the display size compatible with the model information obtained through said model discrimination, and for converting the data size of said first image data into second image data compatible with said display size, and second image data output means for outputting said second image data to a specific terminal device associated with said identification information.

2. A remote monitoring system according to claim 1, wherein at least one sensor for sensing a specific object is provided corresponding to each of said imaging devices; and
said imaging device having first imaging means for performing an imaging process based on an directive from said sensor, and identification information transmission means for transmitting, to said center device, identification information for a user associated with the imaging device that has performed said imaging process; and
said center device having second registration means for registering an e-mail address for said terminal device, associated with said identification information, and first transmission means for transmitting e-mail to an associated specific terminal device depending on said e-mail address.

3. A remote monitoring system according to claim 1, wherein at least one sensor for sensing a specific object is provided corresponding to each of said imaging devices; and
said first registration means registers active members who can issue imaging commands from said terminal device and passive members who can receive image data obtained through imaging commands from said sensor separately.

4. A remote monitoring system according to any of claims 1 - 3, wherein said imaging device comprises second imaging means for imaging said object pseudo-continuously at a predetermined interval, and second transmission means for transmitting continually the first image data that imaged by said second imaging means to said center device; and
said center device comprises receiving means for receiving first image data that is transmitted by said second transmission means, and third transmission means for transmitting said second image data to the concerned terminal device when an image transmit command has been received from a specific terminal device.

5. A remote monitoring system according to claim 4, wherein first image data from before and after detection thereof is converted into said second image data and transmitted to said specific terminal device by said third transmission means when a sensor connected to said imaging device has sensed said object.

6. A remote monitoring system according to any of claims 1 - 5, wherein said center device comprises enlarged display means for selecting a part of said second image data, and for enlarging and displaying on said display part.

7. A remote monitoring system according to any of claims 1 - 6, wherein said terminal device comprises identification information input means for inputting user identification information, and designation means for designating a specific imaging device from at least one imaging device possessed by said user on a display screen; and
said center device comprises provision means for providing said display screen to said terminal device based on said identification information.

8. A remote monitoring system according to any of claims 1 - 7, wherein said terminal device is a mobile communications device.

9. A remote monitoring system according to any of claims 1 - 8, wherein objects to be imaged by said imaging device include animals and plants for enjoyment.

10. A remote monitoring system according to any of Claims 1 - 8, wherein said imaging device is installed in a predetermined location inside or outside of a building.
